# EUROPÄISCHE PATENTSCHRIFT

(11) **EP 4 361 181 B1**
(45) Veröffentlichungstag und Bekanntmachung des Hinweises auf die Patenterteilung: **17.06.2026**
(21) Anmeldenummer: 23206272.9
(22) Anmeldetag: 26.10.2023
(51) Int. Cl.: C08C 1/04, C08L 7/00, C08L 15/00, C08L 19/00

(54) **GUMMIMISCHUNG ENTHALTEND BIOTECHNISCH MODIFIZIERTE GUMMIPARTIKEL**
RUBBER COMPOSITION CONTAINING BIOENGINEERED RUBBER PARTICLES
COMPOSITION DE CAOUTCHOUC CONTENANT DES PARTICULES DE CAOUTCHOUC MODIFIÉES PAR DES TECHNIQUES BIOLOGIQUES

(30) Priorität: 26.10.2022 DE 102022128331
(43) Veröffentlichungstag der Anmeldung: 01.05.2024
(73) Patentinhaber: Vibracoustic SE, 69469 Weinheim (DE)
(72) Erfinder: Deike, Stefanie, 64625 Bensheim (DE); Gräfen, Melanie, 44137 Dortmund (DE); Diehl, Marcel, 65474 Bischofsheim (DE)
(74) Vertreter: Patentanwälte Olbricht Buchhold Keulertz

(56) Entgegenhaltungen:
- EP-A1- 1 426 409
- EP-A1- 1 568 713
- EP-A1- 1 568 714

## Beschreibung

Gegenstand der Erfindung ist eine Gummimischung gemäß dem Oberbegriff von Anspruch 1 und ein Verfahren gemäß Anspruch 11.

Jedes Jahr wird in der Gummi-verarbeitenden Industrie prozessbedingt einen Ausschuss von großen Tonnagen vulkanisiertem Gummi erzeugt, der als Abfall behandelt oder zu minderwertigen Produkten verarbeitet wird. Da Gummi einen hohen Heizwert hat (3,3 * 104 kJ/kg), besteht eine grundlegende Entsorgungsmöglichkeit, insbesondere für Reifen, in der kontrollierten Verbrennung zusammen mit Kohle als alternativem Brennstoff zur Energierückgewinnung, zur Erzeugung von Dampf, elektrischer Energie, Zellstoff, Papier, Kalk und Stahl. Sogar ganze Reifen werden verwendet, vor allem in der Zementindustrie, wo Zementöfen bei Temperaturen von mehr als 1200 °C laufen, was eine vollständige Verbrennung aller Bestandteile gewährleistet. Die Verbrennung der Abfälle führt zur Freisetzung von größeren Mengen Kohlenstoffdioxid (CO₂) und entzieht die verbrannten Mengen dem Wertstoffkreislauf. Viele Reifenhersteller kündigen bereits an ab 2030 in Reifen, einen definierten Anteil recycelter oder biologisch erzeugter Materialien zu verwenden und diesen Anteil stetig zu erhöhen. Aktuell beziehen sich diese Bestrebungen insbesondere auf Kunststoffe, andere Materialien wie Gummi werden jedoch nicht ausgeschlossen und können in Zukunft ebenfalls einen wichtigen Beitrag zu einer zirkularen Wertschöpfungskette leisten.

In den letzten Jahren ist auch in der Kautschukindustrie die Suche nach Möglichkeiten zum Recycling von Materialien beschleunigt worden. Ein Ansatz ist die Pyrolyse von Altgummi und die Verwendung der daraus resultierenden Produkte des "recovered carbon black", Pyrolyseöls und des zurückgewonnenen Stahls. Eine weitere Möglichkeit vulkanisierte Gummiabfälle zur Wiederverwendung aufzubereiten ist die Devulkanisation, mit dem Ziel Schwefel aus dem Material zu extrahieren. Bei diesen Prozessen sollen die Schwefelbrücken aufgebrochen werden, ohne dabei Bindungen innerhalb der Polymerkette zu spalten. Hierzu werden verschiedene Methoden angewendet. Zusätzlich zur thermo-mechanischen Verarbeitung im Extruder werden auch Additive, Ultraschall oder überkritisches CO₂ als Hilfsmittel für eine Verbesserung der Devulkanisation und einer Verringerung der Polymerkettenspaltung eingesetzt. Durch die Verwendung sehr hoher Temperaturen über 150°C bis zu 300°C werden jedoch nicht nur Schwefelbrücken, sondern auch Polymerketten gespalten, wodurch die Eigenschaften verringert werden. Es handelt sich bei den Standard Devulkanisationsverfahren somit eher um ein Downcycling als ein Recycling.

US 2019/0382564 A1 beschreibt eine Gummimischung basierend auf einem Elastomer, einem Füllstoff, einem Vernetzungssystem und ein Gummigranulat. Das Gummigranulat wird durch Recycling von Gummimaterial durch Mahlen zu Partikeln mit einer definierten Partikelgrößenverteilung gewonnen.

Das in solchen Anwendungen verwendete Reifengranulat aus Altreifen oder Gummiabfällen ist nicht modifiziert und führt häufig zu verminderten Eigenschaften der neuen Gummimischung.

Hauptmerkmale der Erfindung sind im kennzeichnenden Teil von Anspruch 1 angegeben. Weitere Ausführungsformen sind Gegenstand der Unteransprüche oder nachfolgend beschrieben.

Die erfindungsgemäße Gummimischung enthält
- Kautschuk ausgewählt aus Naturkautschuk (NR), Butadien-Kautschuk (BR), Styrol-Butadien-Kautschuk (SBR), synthetisches Polyisopren (IR) oder Ethylen-Propylen-Dien-Kautschuk (EPDM) oder einem Blend von zwei oder mehr Kautschuktypen,
- mindestens einen Füllstoff,
- mindestens ein Vernetzungssystem und
- rezyklierte Gummipartikel.
- In jedem Fall enthält die Gummimischung allerdings Naturkautschuk (NR) und/oder synthetisches Polyisopren (IR).

Die rezyklierten Gummipartikel bestehen aus gemahlenem, biotechnologisch modifizierten Polyisopren, ausgewählt aus Naturkautschuk, synthetischem Polyisopren oder Mischungen hiervon. Die rezyklierten Gummipartikel weisen eine funktionalisierte Oberfläche mit funktionellen Gruppen auf.

Unter Gummi werden vulkanisierte natürliche oder synthetische Kautschuke verstanden, die neben Kautschuk weitere Inhaltstoffe enthalten. In der erfindungsgemäßen Gummimischung ist Naturkautschuk, englisch Natural rubber (NR), Butadien-Kautschuk (BR), Styrol-Butadien-Kautschuk (SBR), synthetisches Polyisopren, (IR) oder Ethylen-Propylen-Dien-Kautschuk (EPDM) oder eine Mischung von zwei oder mehr Kautschuktypen enthalten. Bevorzugt enthält die Gummimischungen als Kautschuk eine Mischung aus Naturkautschuk und synthetischem Polyisopren.

Bevorzugt sind die modifizierten Gummipartikel enzymatisch behandelte Gummipartikel auf Basis von vulkanisiertem, rußhaltigen Isopren-Kautschuk.

Die Gummimischung enthält 15 bis 75 phr, bevorzugt min. 50 phr rezyklierte Gummipartikel. Die Gummimischung enthält besonders bevorzugt 50 phr bis 75 phr rezyklierte Gummipartikel.

Die Einheit "phr" bedeutet Gewichtsteile pro hundert Teile Kautschuk. Das heißt, dass pro hundert Teile Rohkautschuk X Teile Gummipartikel bzw. andere Komponenten zusätzlich enthalten sind. Der Anteil des Kautschuks in den Gummipartikeln wird nicht als Rohkautschuk betrachtet. Die phr Angaben beziehen sich immer auf die Zusammensetzung vor der Vulkanisation.

Die modifizierten Gummipartikel haben bevorzugt einen mittleren Partikeldurchmesser von kleiner als 700 µm, bevorzugt von kleiner als 500 µm, weiter bevorzugt kleiner als 400 µm und mehr bevorzugt kleiner als 250 µm.

Die modifizierten Gummipartikel weisen eine funktionalisierte Oberfläche mit funktionellen Gruppen auf. Bevorzugt weisen die modifizierten Gummipartikel als funktionelle Gruppen Carbonylgruppen, vorzugsweise terminale Aldehydgruppen und/oder terminale Ketongruppen auf der Partikeloberfläche auf. Die Aldehydgruppen und Ketongruppen entstehen beim enzymatischen Abbau des Polyisoprens und sind somit Carbonlygruppen am teilweise abgebauten Polyisopren.

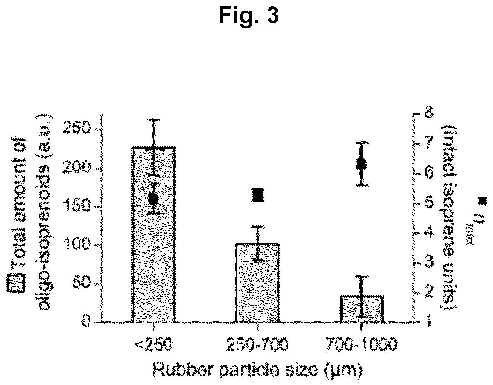

Neben den funktionalisierten Gummipartikeln mit funktionellen Gruppen, entstehen bei der enzymatischen Behandlung von Gummimehl auch funktionalisierte Oligomere. Die Anzahl dieser Oligomere hängt stark von der Partikelgröße des Ausgangsmaterials ab und nimmt mit abnehmender Größe zu. Figur 3 zeigt den Anteil an Oligo-Isoprenoiden nach der enzymatischen Behandlung in Abhängigkeit vom mittleren Partikeldurchmesser des gemahlenen Gummis. Bei kleineren Partikeln und somit größerer Oberfläche, findet eine stärkere Funktionalisierung statt, wodurch eine höhere Anzahl Oligo-Isoprenoide entsteht. Diese funktionalisierten Oligomere können durch ihre speziellen Eigenschaften verschiedene Funktionen beim Einbringen in Kautschukmischungen erfüllen. Durch die geringen Molmassen wirken sie als Verarbeitungshilfsmittel und Weichmacher und sind auf Grund der Funktionalität nicht so leicht extrahierbar wie Öle.

Beispielsweise zeigte flüssiger Butadienkautschuk Vorteile gegenüber TDAE (treated distillate aromatic extract) Öl, da er weniger migrierte und durch die Funktionalität eine bessere Dispersion des Füllstoffs hervorruft.

Zudem können die funktionalisierten Oligomere durch die Kombination von Carbonylfunktionalität und Isoprenstruktur als Vermittler zwischen den Kautschukketten und den modifizierten Partikeln wirken.

Die Gummimischung enthält neben dem Kautschuk Füllstoffe, Vernetzer und andere Vulkanisationshilfsmittel. Geeignete Füllstoffe sind verstärkende Füllstoffe wie z.B. Ruß, Kieselsäure oder Mischungen hiervon. Der Füllstoff ist besonders Ruß, wenn eine Dunkelfärbung des Gummiprodukts erreicht werden soll. Der Füllstoff ist in einer Menge von 5 bis 200 phr, bevorzugt von 10 bis 150 phr enthalten. Geeignete Ruße sind ASTM-klassifizierte Ruße wie beispielsweise N115, N220, N330, N550, N660, N772, N990, aber auch andere Ruße für Gummiwaren sind möglich. Die Mischung kann Kieselsäure oder Mischungen verschiedener Kieselsäuren enthalten.

Das Vernetzungssystem basiert bevorzugt auf Schwefel oder einem Schwefel-Donor und einem primären Vulkanisationsbeschleuniger. Zusätzlich können Sekundärbeschleuniger und Aktivatoren wie z.B. Zinkoxid und Stearinsäure eingesetzt werden. Schwefel ist in einer Menge von 0,1 phr bis 5 phr enthalten, besonders bevorzugt von 0,5 bis 3 phr.

In einer Ausführungsform enthält die Gummimischung zusätzlich eine oder mehrere der folgenden Additive ausgewählt aus, Weichmacher, Harz, Alterungsschutzmittel und Ozonschutzwachs.

Erfindungsgemäß enthält die Gummimischung
100 phr Naturkautschuk und/oder synthetisches Polyisopren,
15 phr bis 75 phr modifizierte Gummipartikel, bevorzugt 50 bis 75 phr,
0,1 phr bis 5 phr Schwefel,
5 phr bis 200 phr Ruß, bevorzugt 10 phr bis 150 phr Ruß,
1 phr bis 50 phr Additive, bevorzugt 1 phr bis 20 phr Additive z.B. Weichmacher, Alterungsschutzmittel, Ozonschutzwachse, Harze, und Beschleuniger.

Zur Herstellung der modifizierten Gummipartikel, d.h. der enzymatisch behandelte Gummipartikel, werden Gummiabfälle aus einer Mischung von Naturkautschuk oder synthetischem Polyisopren oder Blends von Naturkautschuk oder Polyisopren mit anderen Kautschuken, bevorzugt BR oder SBR, mit Ruß, Silica oder anderen Füllstoffen, bevorzugt Gummiabfälle aus Altreifen oder Gummiabfälle aus anderen Gummiprodukten, in Partikel gemahlen. Die durch Mahlen erhaltenen Gummipartikel haben einen mittleren Partikeldurchmesser von kleiner als 700 µm, bevorzugt von kleiner als 500 µm, bevorzugt von kleiner als 400 µm, bevorzugt von kleiner als 250 µm. Die Gummipartikel werden nach dem Mahlen zunächst vorbehandelt. Für die Vorbehandlung werden die Gummipartikel mit organischem Lösungsmittel extrahiert, bevorzugt mit Ethylacetat, Aceton, Chloroform, n-Pentan, Cyclohexan, Hexan, Dichlormethan, Toluol oder Mischungen hiervon, besonders bevorzugt Aceton, Cyclohexan, Chloroform oder eine Mischung von Aceton mit Cyclohexan. Die vorbehandelten Gummipartikel werden mit einem Enzym ausgewählt aus Lcp (Latex clearing protein), RoxA (Rubber Oxygenase), RoxB (Rubber Oxygenase) und Mischungen hiervon, bevorzugt Lcp1_{VH2}, zum Abbau der Gummimischung zu Oligo-Isoprenen und zur Modifizierung der Oberfläche versetzt.

LCPs (Latex clearing Proteine), RoxA und RoxB sind Kautschuk Oxygenasen, welche die Addition von molekularem Sauerstoff an die cis-Doppelbindungen katalysieren, wodurch eine oxidative Spaltung stattfindet, die in der Bildung von Aldehyd- und Keton-Gruppen an der Kautschukkette resultiert. Durch die Verwendung von Gummipartikeln findet die oxidative Spaltung an der Oberfläche statt und erzeugt dort funktionelle Gruppen.

Bevorzugt werden Lcp_{K30}, Lcp1_{VH2}, RoxA_{XSp}, RoxB_{XSp} verwendet, besonders bevorzugt Lcp1_{VH2}.

Die Enzyme werden durch einen Fed-Batch Fermentationsprozess beispielsweise in *E.coli* C41 hergestellt.

Die Behandlung der Gummipartikel kann *in-vitro* in einem Inkubationsschüttler mit einer Pufferlösung z.B. in einem TRIS/HCI-Puffer mit pH 7 stattfinden. Die Zugabe des Enzyms kann durch eine einzelne Zugabe oder in mehreren Schritten z.B. täglich erfolgen über einen Zeitraum von mehreren Tagen, bevorzugt über 5 Tage.

Die modifizierten Gummipartikel werden bevorzugt somit mit folgenden Schritten hergestellt:
- Bereitstellen von Gummiabfällen aus einer Mischung von Naturkautschuk und synthetischem Polyisopren oder aus Naturkautschuk oder aus synthetischem Polyisopren, jeweils enthaltend Ruß, Silica oder andere Füllstoffe,
- Mahlen der Gummiabfälle zu Partikeln mit einem mittleren Partikeldurchmesser von kleiner als 700 µm, bevorzugt von kleiner als 500 µm, weiter bevorzugt kleiner als 400 µm und mehr bevorzugt von kleiner als 250 µm,
- Vorbehandeln der Gummipartikel mit einem organischen Lösungsmittel in einem extraktionsschritt und
- Behandeln der Gummipartikel mit einem Enzym ausgewählt aus Lcp, RoxA, RoxB und Mischungen hiervon.

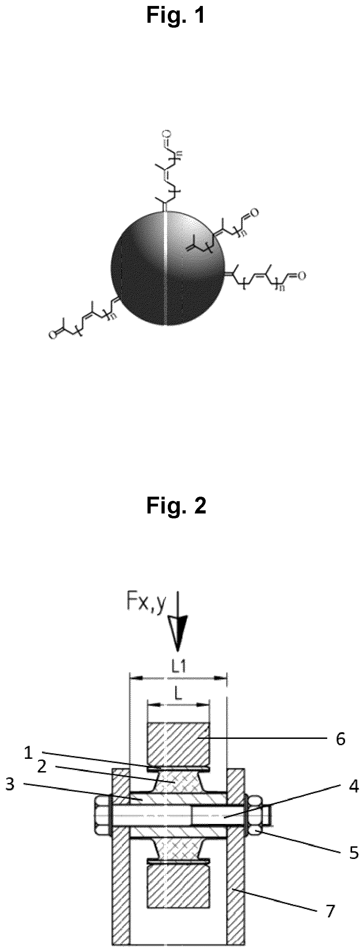

Durch dieses Herstellungsverfahren für die modifizierten Gummipartikel wird eine Spaltung von Schwefelbrücken vermieden und es wird eine selektive Spaltung der Kautschukketten sowie eine Funktionalisierung der Oberfläche der Gummipartikel mit Carbonylgruppen erreicht. Figur 1 zeigt beispielhaft einen modifizierten Gummipartikel mit Carbonylgruppen und Polyisoprenrestgruppen auf der Oberfläche. Durch die erhöhte Kettenflexibilität nach Spaltung, sowie die polare Funktionalisierung kann das entstehende Material als aktiver Füllstoff in neue Gummimischungen integriert werden, wobei die Eigenschaften des entstehenden Materials dem Original sehr ähnlich sind, während devulkanisiertes Material zu einer deutlichen Verschlechterung der Eigenschaften führt. Insbesondere die hohen Temperaturen, die für die erfolgreiche Devulkanisation benötigt werden, schädigen das Material irreversibel.

Die Gummipartikel sind somit unter Verwendung von Enzymen modifiziert, wobei das Schwefelnetzwerk des rezyklierten Gummis erhalten bleibt. Die resultierenden Gummipartikel sind an der Oberfläche funktionalisiert, wodurch sie eine verbesserte Anbindung an die Gummimatrix zeigen. Dadurch können mehr als 15 phr funktionalisierte Gummipartikel zu einer neuen Kautschukmischung hinzugefügt werden unter gleichbleibenden oder verbesserten Eigenschaften, während bei nicht-modifizierten Partikeln maximal weniger als 10 phr hinzugefügt werden können.

Durch den Zusatz der modifizierten Gummipartikel werden die physikalischen Eigenschaften von Gummimischungen und die Lebensdauer von Motorlagern oder Buchsen verbessert. Durch die Verwendung von enzymatisch behandeltem Gummigranulat mit funktionalisierter Oberfläche erfolgt eine bessere Anbindung an die Kautschukmatrix. Insbesondere hochwertige Gummiabfälle, die direkt bei der Gummiproduktion entstehen, können in die Kreislaufwirtschaft eingeführt werden und müssen nicht mehr verbrannt werden.

Gegenstand der Erfindung ist weiterhin die Verwendung der erfindungsgemäßen Gummimischungen für technische Gummiwaren, bevorzugt für Motorlager und Buchsen.

Die erfindungsgemäße Gummimischung, die biotechnologisch modifizierte Gummipartikeln enthält, kann für Bauteile im Automobilbereich verwendet werden. Die neuentwickelten Materialien sollen in Motorlagern oder Buchsen eingesetzt werden. Jedoch sind auch andere typische Anwendungen für Naturkautschuk-Mischungen denkbar.

Durch die biotechnische Aufarbeitung des vulkanisierten Gummis und die Verwendung der hochwertigen, modifizierten Gummipartikel in neuen Mischungen, wird die Abfallmenge sowie die emittierte CO₂ Menge durch die Verwendung von Rezyklat deutlich reduziert und der Recyclinganteil im Produkt erhöht. Am Beispiel von Reifen, die auf Grund ihrer Menge bisher am häufigsten untersucht wurden, konnte gezeigt werden, dass die stoffliche Verwertung gegenüber der Verbrennung in der Zementindustrie zu einer Einsparung von 2,5 Tonnen CO₂ pro Tonne Reifen führt. Für vulkanisierte Gummimischungen ist daher von einer ähnlichen Größenordnung auszugehen.

Die modifizierten Gummipartikel können als Rezyklat in hohen Anteilen von 50 phr (parts per hundred rubber) eingemischt werden.

### Beispiele

### Beispiel I Herstellung der modifizierten Partikel

Zur Herstellung modifizierter Partikel wurde das Gummigranulat zusammen mit Lcp1_{vH2} und einer Pufferlösung (TRIS/HCI-buffer (0.2 M, pH 7)) in einem Glasgefäß für 5 Tage in einem Inkubationsschüttler bei 30°C behandelt. Hierzu wurden 500mg Enzym pro Gramm Gummigranulat verwendet und das Gefäß bei 90rpm geschüttelt.

### Beispiel II Herstellung der Gummimischung

Es wurden Gummimischungen mit den in Tabelle 1 angegebenen Zusammensetzungen hergestellt.

**Tabelle 1 Rezepturen der Gummimischungen vor der Vulkanisation, mit 6PPD = N-(1,3-Dimethylbutyl)-N'-phenyl-p-phenylendiamin, CBS = Beschleuniger auf Basis N-Cyclohexyl-2-benzothiazyl-sulfenamid; CBS und Schwefel bilden zusammen das Vernetzungssystem**

| | Gummimischung M1 | Vergleichsmischung V1 |
|---|---|---|
| *Naturkautschuk (NR)* | 100 | 100 |
| Modifizierte Gummipartikel aus Beispiel I | 50 | -- |
| Russ (ASTM N550) | 80 | 80 |
| Zinkoxid | 5 | 5 |
| Stearinsäure | 2 | 2 |
| Alterungsschutzmittel* (6PPD) | 2 | 2 |
| Beschleuniger* (CBS) | 2 | 2 |
| Schwefel | 2 | 2 |

Die oben genannten Komponenten wurden in einem Innenmischer in zwei Stufen gemischt. In der ersten Stufe wurden alle Komponenten außer dem Vernetzungssystem gemischt, bis eine Maximaltemperatur von 110°C bis 190°C erreicht wurde. In der zweiten Stufe wurde das Vernetzungssystem hinzugegeben und bei Temperaturen unter 110°C für maximal 5 Minuten gemischt.

Die erhaltenen Mischungen wurden bei 150°C für 15 Minuten vulkanisiert um 2mm Platten sowie Elastomerbuchsen gemäß Figur 2 zu erhalten.

Man erkennt in Figur 2 beispielhaft eine Elastomerbuchse mit einer Außenhülse 1, einem Elastomerkörper 2 und einer Innenhülse 3, die in einer Prüfvorrichtung 6,7 angeordnet ist. Dabei bezeichnet Fx,y die Kraft, die auf die Prüfvorrichtung 6 ausgeübt wird. Die Prüfvorrichtung 6 verbindet die Teile der Testmaschine, die sich bewegen, mit der Außenhülse 1. Man erkennt weiter, dass die Elastomerbuchse mit Hilfe von Bolzen 5 an einem feststehenden Teil 7 der Prüfvorrichtung festgelegt ist, insbesondere der Kern 4 der Buchse ist mit Hilfe des Bolzens 5 am feststehenden Teil 7 der Prüfvorrichtung festgelegt.

### Bestimmung der Materialeigenschaften

Die in Beispiel II hergestellten Gummimischungen wurden auf ihre mechanischen Eigenschaften nach DIN 53504 untersucht. Außerdem wurden aus den erhaltenen Mischungen Lagerbuchsen als Musterbauteile hergestellt und gemäß Figur 2 in einem Dauerversuch bei 23°C zyklisch radial belastet unter zwei unterschiedlichen Amplituden. Die gemessenen Eigenschaften sowie die Ergebnisse der Lebensdauerprüfung einer Referenzmischung sowie einer Mischung mit 50phr modifizierter Gummipartikel sind in Tabelle 2 aufgeführt.

Die Eigenschaften der Gummimischung gemäß Beispiel M1 im Vergleich zu einer Referenzmischung V1 ohne Elastomerpartikel konnten dabei deutlich verbessert werden, ebenso wie die Lebensdauer von Elastomerbuchsen, die mit dieser Mischung hergestellt wurden.

**Tabelle 2 Mechanische Eigenschaften und Ergebnisse der Lebensdauerprüfung der vulkanisierten Mischungen**

| | | Beispiel | |
|---|---|---|---|
| | | M1 | V1 |
| Bruchdehnung | [%] | 331 | 300 |
| Zugfestigkeit | [N/mm²] | 18,9 | 16,9 |
| Anzahl Lastwechsel (2mm Amplitude) | | 842.500 | 272.500 |
| Anzahl Lastwechsel (1,75mm Amplitude) | | 2.200.000 | 1.610.000 |

Somit konnte gezeigt werden, dass die Zugabe von funktionalisiertem Elastomerabfall nicht nur zu Mischungen mit gleichen Eigenschaften führt, sondern diese Eigenschaften sogar deutlich verbessern kann.

## Patentansprüche

1. Gummimischung enthaltend
- Kautschuk ausgewählt aus Naturkautschuk, Butadien-Kautschuk, Styrol-Butadien-Kautschuk, synthetisches Polyisopren oder Ethylen-Propylen-Dien-Kautschuk oder einem Blend von zwei oder mehr Kautschuktypen, in jedem Fall Naturkautschuk und/oder synthetisches Polyisopren,
- mindestens einen Füllstoff,
- mindestens ein Vernetzungssystem und
- rezyklierte Gummipartikel,
**dadurch gekennzeichnet, dass** die rezyklierten Gummipartikel aus enzymatisch behandelten Kautschukmischungen bestehen und eine funktionalisierte Oberfläche mit funktionellen Gruppen aufweisen und
die Gummimischung enthält
| | |
|---|---|
| 100 phr | Naturkautschuk und/oder synthetisches Polyisopren, |
| 15 phr bis 75 phr | modifizierte Gummipartikel, |
| 0,1 phr bis 5 phr | Schwefel, |
| 5 phr bis 200 phr | Ruß, |
| 1 phr bis 50 phr | weiterer Additive. |

2. Gummimischung gemäß Patentanspruch 1, **dadurch gekennzeichnet, dass** die biotechnologisch modifizierten Gummipartikel enzymatisch behandelte Gummipartikel auf Basis von vulkanisiertem Isopren-Kautschuk sind.

3. Gummimischung gemäß einem der vorhergehenden Patentansprüche, **dadurch gekennzeichnet, dass** die Gummimischung min. 50 phr enzymatisch behandelte Gummipartikel enthält.

4. Gummimischung gemäß einem der vorhergehenden Patentansprüche, **dadurch gekennzeichnet, dass** die Gummipartikel einen mittleren Partikeldurchmesser von kleiner als 700 µm, bevorzugt von kleiner als 500 µm, weiter bevorzugt kleiner als 400 µm und mehr bevorzugt von kleiner als 250 µm haben.

5. Gummimischung gemäß einem der vorhergehenden Patentansprüche, **dadurch gekennzeichnet, dass** die modifizierte Gummipartikel als funktionelle Gruppen Carbonylgruppen, bevorzugt terminale Aldehydgruppen und/oder terminale Ketongruppen auf der Partikeloberfläche aufweisen.

6. Gummimischung gemäß einem der vorhergehenden Patentansprüche, **dadurch gekennzeichnet, dass** die Gummimischung als Kautschuk eine Mischung aus Naturkautschuk und synthetischem Polyisopren enthält.

7. Gummimischung gemäß einem der vorhergehenden Patentansprüche, **dadurch gekennzeichnet, dass** der Füllstoff Ruß oder Kieselsäure ist.

8. Gummimischung gemäß einem der vorhergehenden Patentansprüche, **dadurch gekennzeichnet, dass** das Vernetzungssystem Schwefel ist und bevorzugt Schwefel in einer Menge von 0,1 phr bis 5 phr enthalten ist.

9. Gummimischung gemäß einem der vorhergehenden Patentansprüche, **dadurch gekennzeichnet, dass** die Gummimischung zusätzlich eine oder mehrere der folgenden Komponenten enthält Weichmacher, Harz, Alterungsschutzmittel und Beschleuniger.

10. Gummimischung gemäß einem der vorhergehenden Patentansprüche, **dadurch gekennzeichnet, dass** die Gummimischung bevorzugt 10 phr bis 150 phr Ruß enthält.

11. Gummimischung gemäß einem der vorhergehenden Patentansprüche, **dadurch gekennzeichnet, dass** die modifizierten Gummipartikel in einem Verfahren umfassend folgenden Schritten hergestellt werden:
a) Bereitstellen von Gummiabfällen aus einer Mischung von Naturkautschuk und synthetischem Polyisopren oder aus Naturkautschuk oder aus synthetischem Polyisopren, jeweils enthaltend Ruß, Silica oder andere Füllstoffe,
b) Mahlen der Gummiabfälle zu Partikeln mit einem mittleren Partikeldurchmesser von kleiner als 700 µm, bevorzugt von kleiner als 500 µm, weiter bevorzugt kleiner als 400 µm und mehr bevorzugt von kleiner als 250 µm,
c) Vorbehandeln der Gummipartikel mit einem organischen Lösungsmittel in einem Extraktionsschritt und
d) Behandeln der Gummipartikel mit einem Enzym ausgewählt aus Lcp, RoxA, RoxB und Mischungen hiervon.

12. Verfahren zur Herstellung modifizierter Gummipartikel gemäß einem der Patentansprüche 1 bis 11 umfassend folgenden Schritten:
a) Bereitstellen von Gummiabfällen aus einer Mischung von Naturkautschuk und synthetischem Polyisopren oder aus Naturkautschuk oder aus synthetischem Polyisopren, jeweils enthaltend Ruß, Silica oder andere Füllstoffe,
b) Mahlen der Gummiabfälle zu Partikeln mit einem mittleren Partikeldurchmesser von kleiner als 700 µm, bevorzugt von kleiner als 500 µm, weiter bevorzugt kleiner als 400 µm und mehr bevorzugt von kleiner als 250 µm,
c) Vorbehandeln der Gummipartikel mit einem organischen Lösungsmittel in einem Extraktionsschritt und
d) Behandeln der Gummipartikel mit einem Enzym ausgewählt aus Lcp, RoxA, RoxB und Mischungen hiervon.

13. Verwendung von Gummimischungen gemäß einem der Patentansprüche 1 bis 11 für technische Gummiwaren, bevorzugt für Motorlager und Buchsen.

## Claims

1. Rubber compound containing
- rubber selected from natural rubber, butadiene rubber, styrene-butadiene rubber, synthetic polyisoprene or ethylene-propylene-diene rubber, or a blend of two or more types of rubber, in each case natural rubber and/or synthetic polyisoprene,
- at least one filler,
- at least one cross-linking system, and
- recycled rubber particles,
**characterised in that** the recycled rubber particles consist of enzymatically treated rubber compounds and have a functionalised surface with functional groups, and
the rubber mixture contains
| | |
|---|---|
| 100 phr | natural rubber and/or synthetic polyisoprene, |
| 15 phr to 75 phr | modified rubber particles, |
| 0.1 phr to 5 phr | sulphur, |
| 5 phr to 200 phr | carbon black, |
| 1 phr to 50 phr | other additives. |

2. Rubber compound according to claim 1, **characterised in that** the biotechnologically modified rubber particles are enzymatically treated rubber particles based on vulcanised isoprene rubber.

3. Rubber compound according to one of the preceding patent claims, **characterised in that** the rubber compound contains at least 50 phr of enzymatically treated rubber particles.

4. Rubber compound according to one of the preceding patent claims, **characterised in that** the rubber particles have an average particle diameter of less than 700 µm, preferably less than 500 µm, more preferably less than 400 µm and even more preferably less than 250 µm.

5. Rubber compound according to one of the preceding patent claims, **characterised in that** the modified rubber particles have carbonyl groups, preferably terminal aldehyde groups and/or terminal ketone groups, as functional groups on the particle surface.

6. Rubber compound according to one of the preceding patent claims, **characterised in that** the rubber compound contains a mixture of natural rubber and synthetic polyisoprene as rubber.

7. Rubber compound according to one of the preceding patent claims, **characterised in that** the filler is carbon black or silica.

8. Rubber compound according to one of the preceding patent claims, **characterised in that** the cross-linking system is sulphur and preferably sulphur is contained in an amount of 0.1 phr to 5 phr.

9. Rubber compound according to one of the preceding patent claims, **characterised in that** the rubber compound additionally contains one or more of the following components: plasticiser, resin, anti-ageing agent and accelerator.

10. Rubber compound according to one of the preceding patent claims, **characterised in that** the rubber compound preferably contains 10 phr to 150 phr of carbon black.

11. Rubber compound according to one of the preceding patent claims, **characterised in that** the modified rubber particles are produced in a method comprising the following steps:
a) providing rubber waste from a mixture of natural rubber and synthetic polyisoprene or from natural rubber or from synthetic polyisoprene, each containing carbon black, silica or other fillers,
b) grinding the rubber waste into particles with a mean particle diameter of less than 700 µm, preferably less than 500 µm, more preferably less than 400 µm and even more preferably less than 250 µm,
c) pretreating the rubber particles with an organic solvent in an extraction step, and
d) treating the rubber particles with an enzyme selected from Lcp, RoxA, RoxB and mixtures thereof.

12. Method for producing modified rubber particles according to one of claims 1 to 11, comprising the following steps:
a) providing rubber waste from a mixture of natural rubber and synthetic polyisoprene or from natural rubber or from synthetic polyisoprene, each containing carbon black, silica or other fillers,
b) grinding the rubber waste into particles with a mean particle diameter of less than 700 µm, preferably less than 500 µm, more preferably less than 400 µm and even more preferably less than 250 µm,
c) pretreating the rubber particles with an organic solvent in an extraction step, and
d) treating the rubber particles with an enzyme selected from Lcp, RoxA, RoxB and mixtures thereof.

13. Use of rubber compounds according to one of claims 1 to 11 for technical rubber goods, preferably for engine mounts and bushings.

## Revendications

1. Composition de caoutchouc comprenant
- du caoutchouc choisi parmi le caoutchouc naturel, le caoutchouc butadiène, le caoutchouc styrène-butadiène, le polyisoprène synthétique ou le caoutchouc éthylène-propylène-diène, ou un mélange de deux ou plusieurs types de caoutchouc, dans chaque cas du caoutchouc naturel et/ou du polyisoprène synthétique,
- au moins une charge,
- au moins un système de réticulation et
- des particules de caoutchouc recyclées,
**caractérisé en ce que** les particules de caoutchouc recyclées sont constituées de mélanges de caoutchouc traités enzymatiquement et présentent une surface fonctionnalisée avec des groupes fonctionnels, et
le mélange de caoutchouc contient
| | |
|---|---|
| 100 phr | de caoutchouc naturel et/ou de polyisoprène synthétique, |
| 15 phr à 75 phr | de particules de caoutchouc modifiées, |
| 0,1 phr à 5 phr | soufre, |
| 5 phr à 200 phr | noir de carbone, |
| 1 phr à 50 phr | autres additifs. |

2. Composition de caoutchouc selon la revendication 1, **caractérisée en ce que** les particules de caoutchouc modifiées par voie biotechnologique sont des particules de caoutchouc traitées par voie enzymatique à base de caoutchouc isoprène vulcanisé.

3. Composition de caoutchouc selon l'une des revendications précédentes, **caractérisé en ce que** la composition de caoutchouc contient au moins 50 phr de particules de caoutchouc traitées enzymatiquement.

4. Composition de caoutchouc selon l'une des revendications précédentes, **caractérisée en ce que** les particules de caoutchouc ont un diamètre moyen inférieur à 700 µm, de préférence inférieur à 500 µm, de préférence encore inférieur à 400 µm et de préférence inférieur à 250 µm.

5. Composition de caoutchouc selon l'une des revendications précédentes, **caractérisée en ce que** les particules de caoutchouc modifiées présentent comme groupes fonctionnels des groupes carbonyles, de préférence des groupes aldéhydes terminaux et/ou des groupes cétones terminaux à la surface des particules.

6. Composition de caoutchouc selon l'une des revendications précédentes, **caractérisée en ce que** la composition de caoutchouc contient comme caoutchouc un mélange de caoutchouc naturel et de polyisoprène synthétique.

7. Composition de caoutchouc selon l'une des revendications précédentes, **caractérisée en ce que** la charge est du noir de carbone ou de l'acide silicique.

8. Composition de caoutchouc selon l'une des revendications précédentes, **caractérisée en ce que** le système de réticulation est du soufre et contient de préférence du soufre en une quantité de 0,1 phr à 5 phr.

9. Composition de caoutchouc selon l'une des revendications précédentes, **caractérisée en ce que** la composition de caoutchouc contient en outre un ou plusieurs des composants suivants: plastifiant, résine, agent anti-vieillissement et accélérateur.

10. Composition de caoutchouc selon l'une des revendications précédentes, **caractérisée en ce que** la composition de caoutchouc contient de préférence 10 phr à 150 phr de noir de carbone.

11. Composition de caoutchouc selon l'une des revendications précédentes, **caractérisée en ce que** les particules de caoutchouc modifiées sont produites dans un procédé comprenant les étapes suivantes:
a) fourniture de déchets de caoutchouc provenant d'un mélange de caoutchouc naturel et de polyisoprène synthétique ou de caoutchouc naturel ou de polyisoprène synthétique, contenant chacun du noir de carbone, de la silice ou d'autres charges,
b) broyage des déchets de caoutchouc en particules ayant un diamètre moyen inférieur à 700 µm, de préférence inférieur à 500 µm, de préférence encore inférieur à 400 µm et de préférence inférieur à 250 µm,
c) prétraiter les particules de caoutchouc avec un solvant organique dans une étape d'extraction et
d) traitement des particules de caoutchouc avec une enzyme choisie parmi Lcp, RoxA, RoxB et leurs mélanges.

12. Procédé de fabrication de particules de caoutchouc modifiées selon l'une des revendications 1 à 11, comprenant les étapes suivantes:
a) fourniture de déchets de caoutchouc provenant d'un mélange de caoutchouc naturel et de polyisoprène synthétique ou de caoutchouc naturel ou de polyisoprène synthétique, contenant chacun du noir de carbone, de la silice ou d'autres charges,
b) broyage des déchets de caoutchouc en particules ayant un diamètre moyen inférieur à 700 µm, de préférence inférieur à 500 µm, mieux encore inférieur à 400 µm et plus préférablement inférieur à 250 µm,
c) prétraiter les particules de caoutchouc avec un solvant organique dans une étape d'extraction et
d) traitement des particules de caoutchouc avec une enzyme choisie parmi Lcp, RoxA, RoxB et leurs mélanges.

13. Utilisation de compositions de caoutchouc selon l'une des revendications 1 à 11 pour des articles techniques en caoutchouc, de préférence pour des supports de moteur et des douilles.
